# EUROPEAN PATENT APPLICATION

(11) **EP 1 722 169 A2**
(43) Date of publication of application: **15.11.2006**
(21) Application number: 06009150.1
(22) Date of filing: 03.05.2006
(51) Int. Cl.: F24F 6/02

(54) **Ventilation apparatus having humidity adjusting and sterilizing device and method for controlling the same**

(30) Priority: 03.05.2005 KR 20050037130
(71) Applicant: LG Electronics Inc., Yongdungpo-gu Seoul (KR)
(72) Inventor: Lee, Ju youn, Dongjak-gu, Seoul (KR); Kim, Ho Jung, Bupyeong-gu Incheon (KR); Choi, In Ho, Gunpo-si (KR); Yum, Kwan ho, Guro-gu Seoul (KR)
(74) Representative: Vossius & Partner

(57) **Abstract**

A ventilation apparatus having a humidity adjusting and sterilizing device, and a method for controlling the same method are disclosed. A humidity adjusting and sterilizing device includes a channel (110) allowing air to flow therein; a housing (150) having a side in communication with the channel, the housing having the other sides closed; a tub (160) mounted within the housing for holding water therein; and a microwave generator (172) for humidifying the air within the channel and for sterilizing bacteria contained in the air of the channel by radiating the microwaves discharged into the channel. The humidity adjusting and sterilizing device includes a housing having a side in communication with the inlet channel, the housing having the other sides closed; a tub mounted within the housing for holding water therein; and a microwave generator for radiating microwaves into the housing and the tub and.

## Description

This application claims the benefit of the Patent Korean Application No. P2005-37130, filed on May 03, 2005, which is hereby incorporated by reference as if fully set forth herein.

The present invention relates to a ventilation apparatus having a humidity adjusting and sterilizing device and a method for controlling the same, and more particularly, to a ventilation apparatus having a humidity adjusting and sterilizing device for adjusting and sterilizing humidity of air drawn into a room.

Interior air in a room may contain more carbon dioxide due to human perspiration as time goes by. Hence, the high carbon dioxide content in the room may affect human perspiration. Thus, when many people should stay together in small space such as an office or a vehicle, polluted air within the space should exchanged with fresh air outside. A ventilation device is commonly used at that time.

Conventional ventilation devices in the related art forcibly ventilate only interior air to an outside by using one ventilator. However, in case that only interior air is forcibly ventilated to an outside by using one ventilator, cool air or heat in the room is discharged to an outside and exterior air is drawn into the room through a door or window without heat-exchanging. Thus, the cost needed to cool/heat the room may unnecessarily rise.

Also, the temperature of the interior air may be drastically changed, because cold air and hot air are drawn into the room. Thereby, people in the room may feel unpleasant. Especially, when only interior air is discharged to an outside in a sate where a window or a door is closed, inlet of the outside fresh air is stopped and then anoxia may be caused. Also although the ventilation device is provided in the room, humidity of the interior air cannot be controlled. Thereby, pleasant interior atmosphere may be maintained.

To solve the above problem, a ventilation device with a total heat exchanging structure has been presented, in which exterior air is heat-exchanged with interior air and supplied into a room.

The ventilation device with a total heat exchanging structure includes an outlet channel for exhausting interior air outside, an inlet channel for drawing exterior air into a room and a heat-exchanger for exchanging heat between the air flowing within the outlet channel and the air flowing within the inlet channel.

Thus, the drastic increase/decrease of the interior air temperature may be prevented, because the exterior air drawn in a cooling mode or heating mode is drawn into the room after heat-exchanging with the interior air.

Meanwhile, the above conventional ventilation device performs only heat-exchanging function in that waste heat discharged by the heat-exchanger is recovered and transmitted into the air drawn into the room. However, bacteria contained in the air are also drawn into the room and may do harm to room resident health.

Moreover, humidity may be low in the winter due to the high temperature of the room and the relatively low temperature outside, and the room may be very dry. Thus, additional humidifying facilities or air conditioners are provided in the public offices or buildings to humidify the dry interior rooms.

However, the above auxiliary facilities are generally in large sizes, thereby causing a problem of installation space or additional cost for the auxiliary sterilizing device and the auxiliary humidifier in a common house.

Also, recently, experiments and researches for sterilizing bacteria by using an ultraviolet ray lamp have been studied, but the ultraviolet lamp has a short usage life. Thereby, there may be an inconvenience that the lamp should be replaced quite often.

Accordingly, the present invention is directed to a ventilation apparatus having a humidity adjusting and sterilizing device, and a method for controlling the same that substantially obviates one or more problems due to limitations and disadvantages of the related art.

An object of the present invention is to provide a ventilation apparatus having a humidity adjusting and sterilizing device which can perform humidity adjustment and sterilization at the same time with the least volume, and a method for controlling the same

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a humidity adjusting and sterilizing device comprising: a channel allowing air to flow therein; a housing having a side in communication with the channel, the housing having the other sides closed; a tub mounted within the housing for holding water therein; and a microwave generator for heating the water within the tub by radiating microwaves into the housing and the tub to humidify the air within the channel and for sterilizing bacteria contained in the air of the channel by the microwaves discharged into the channel.

Here, the housing is made of material which shuts off the microwaves radiated by the microwave generator.

Also, the tub is made of heat-proof material which passes through the microwaves radiated by the microwave generator and is prevented from being in deformity by the heat.

The microwave generator comprises a magnetron.

A microwave generator may be further provided within the channel for sterilizing bacteria contained in the air flowing within the channel.

Also, a water supply pipe connected with the tub may be further provided for supplying water to the tub, and a water drainage pipe connected with the tub may be provided for draining the water within the tub.

Preferably, a humidity sensor may be further provided for measuring the humidity of air flowing within the part. The humidity sensor is provided at a portion of the channel so that the air may be flown through the humidity sensor before the housing.

In another aspect of the present invention, a ventilation apparatus includes a case defining an exterior thereof; a inlet channel provided within the case for drawing exterior air into a room; a outlet channel provided within the case for discharging interior air to an outside; a humidity adjusting and sterilizing device mounted within the inlet channel for adjusting humidity of the air drawn into the room and sterilizing bacteria contained in the air flowing the channel.

The humidity adjusting and sterilizing device includes a housing having a side in communication with the inlet channel, the housing having the other sides closed; a tub mounted within the housing for holding water therein; and a microwave generator for heating the water within the tub by radiating microwaves into the housing and the tub and for sterilizing bacteria contained in the air of the inlet channel by discharging the microwaves into the housing and the tub.

Also, the housing includes a holding part for holding the tub and the microwave generator therein; a first pipe having an end in communication with the holding part, the first pipe extended toward a side; and at least one second pipe having at least one portion provided within the inlet channel and an end thereof in communication with the first pipe, the second pipe having a plurality of holes formed on the portion provided within the inlet channel.

The humidity adjusting and sterilizing device includes a water supply pipe connected with the tub for supplying water into the tub; and a valve for selectively opening/closing the water supply pipe.

Also, the ventilation apparatus of claim 11, wherein the humidity adjusting and sterilizing device further includes a water drainage pipe connected with the tub for draining the water within the tub to an outside; and a valve selectively opening/closing the water drainage pipe.

The humidity adjusting and sterilizing device further comprises a humidity sensor for measuring the humidity of the air flowing within the inlet channel. The humidity sensor is provided at a portion of the inlet channel so that the air may be flown through the humidity sensor before the housing.

The housing is made of material which shuts off the microwaves radiated by the microwave generator. The housing is made of stainless.

The tub is made of material which transmits microwaves.

Preferably, the humidity adjusting and sterilizing device further includes a heat-exchanger provided within the case for exchanging heat between the air of the inlet channel and the air of the outlet channel.

The humidity adjusting and sterilizing device is mounted lower than the heat-exchanger.

The humidity adjusting and sterilizing device further includes a dehumidifier for dehumidify air. The dehumidifier is provided in the inlet channel and is lower than the heat-exchanger.

In still another embodiment of the present invention, a method for controlling a ventilation apparatus having a humidity adjusting and sterilizing device includes steps of: predetermining an optimal humidity of interior air; measuring the humidity of air drawn into a room by using a humidity sensor; determining the amount of humidity adjustment based on the comparison between the optimal humidity and the measured humidity of air drawn into the room; and adjusting the humidity of air drawn into the room by using the microwave generator and the dehumidifier.

Humidification is performed by the microwave generator until the humidity of air drawn into the room reaches to the optimal humidity, in case that the measured humidity of air drawn into the room is lower than the predetermined optimal humidity.

Dehumidification is performed by the dehumidifier until the humidity of air drawn into the room reaches to the optimal humidity, in case that the measured humidity of air drawn into the room is higher than the predetermined optimal humidity.

The method for controlling a ventilation apparatus having a humidity adjusting and sterilizing device further includes steps of: calculating the power of the microwave generator for stylizing bacteria contained in the air drawn into the room based on the air inlet amount, and sterilizing bacteria contained in the air by using the microwave generator.

The water within the tub is emptied and sterilization is performed by operating the microwave generator, in case that the humidity of air drawn into the room is the same or high as/than the predetermined optimal humidity.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate preferred embodiment(s) of the invention and together with the description serve to explain the principle of the invention. In the drawings:

FIG. 1 is a sectional view schematically illustrating a humidity adjusting and sterilizing device according to an embodiment of the present invention.

FIG. 2 a perspective view illustrating a ventilation apparatus having a humidity adjusting and sterilizing device according to another embodiment of the present invention.

FIG. 3 is a perspective view enlargedly illustrating the housing of FIG. 2.

FIG. 4 is a flow chart illustrating a method for controlling the ventilation apparatus having a humidity adjusting and sterilizing device according to the present invention.

Reference will now be made in detail to the preferred embodiments of the present invention, examples of which are illustrated in the accompanying drawings. Wherever possible, the same reference numbers will be used throughout the drawings to refer to the same or like parts.

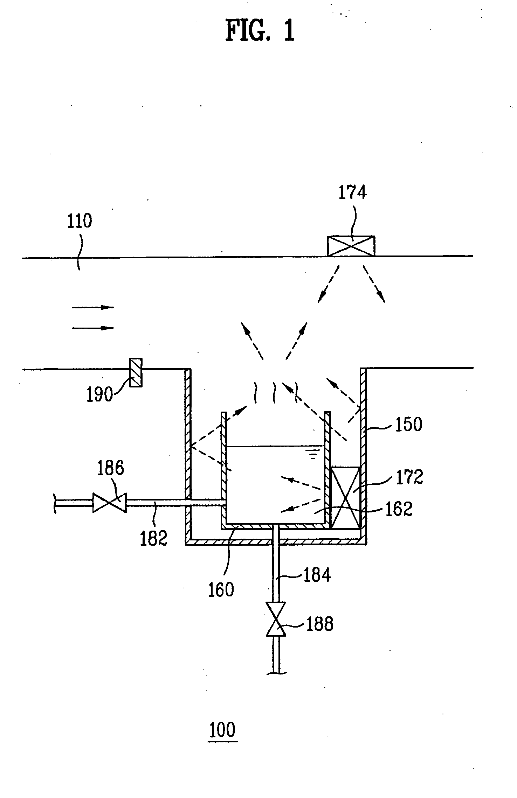

FIG. 1 is a sectional view schematically illustrating a humidity adjusting and sterilizing device according to an embodiment of the present invention.

The humidity adjusting and sterilizing device according to the embodiment of the present invention includes a housing 150, a tub 160 for storing water therein and a microwave generator 172 for radiating microwaves.

Here, a side of the housing 150 is opened and the other sides thereof are closed. The opened side is in communication with the channel 110 flowing air therein.

The tub 160 is mounted within the housing 150. A side of the tub 160 is opened in communication with the channel 110. Hence, a first microwave generator 172 is mounted in a side within the housing 150 to radiate microwaves into the housing 150.

Here, a first side of the channel 110 is in communication with an outside, and a second side thereof is in communication with a room, such that exterior air may be drawn into the room through the channel 110.

At that time, the housing 150 is made of material which can shut off the microwaves without transmitting the microwaves. The tub 160 is made of material which can transmit the microwaves.

Also, the housing 150 and the tub 160 are made of moisture-and-heat-proof material which can prevent deformity caused by the heat of steam.

Thus, according to the embodiment, stainless is applied to the housing 150, and glass is applied to the tub 160. Of course, the materials of the housing 150 and the tub 160 are not limited to stainless and glass and various materials may be applied thereto.

Preferably, the tub includes a water supply pipe 182 for supplying water to the tub and a water drainage pipe 184 for draining the water of the tub 160.

Also a water supply valve 186 and a water drainage valve 188 are provided in the water supply pipe 182 and the water drainage pipe 184, respectively.

Preferably, a humidity sensor 190 is provided within the channel 110 for measuring the humidity of the air flowing in the channel 110.

The humidity sensor 190 is provided at a portion of the channel so that the air may be flown through the humidity sensor 190 before the housing 150.

That is for measuring the humidity of the air flowing within the channel 110 before humidity is supplied to the air by the housing 150.

Operations of the humidity adjusting and sterilizing device according to the present invention will be described as follows.

Once the humidity of air flowing within the channel is measured and determined to be humidified, the water supply valve 186 is opened and water 162 of the tub is supplied through the water supply pipe 182. Hence, the first microwave generator 172 radiates microwaves into the housing 150.

Here, since the housing 150 is made of material which can shut off the microwaves and the tub 160 is made of material which can transmit the microwaves, the microwaves are reflected in the housing 150 for heating the water 162 within the tub 160.

The heated water 162 generates steam, and the steam ascends into the channel 110 through the opened side of the housing 150. Hence, the steam is mixed with the air flowing within the channel 110 and increases the humidity of the air flowing within the channel 110.

Also, since the ascending steam has a high temperature, bacteria contained in the air may be sterilized by the heat of the steam.

Also, since the housing has the opened side, the microwaves radiated into the housing 150 by the microwave generator 172 are reflected inside of the housing 150 and discharged through the portion in communication with the channel 110. The microwaves discharged into the channel 110 sterilize bacteria contained in the air.

That is, some of the microwaves radiated by the first microwave generator 172 heat the water of the tub 160 and generate steam, and the other microwaves sterilize the bacteria contained in the air within the channel 110.

Furthermore, a second microwave generator may be provided to radiate microwaves directly into the channel 110, in addition to the first microwave generator.

The second microwave generator 174 is employed only to sterilize bacteria contained in the air flowing within the channel 110. Thus, the bacteria contained in the air may perfectly be sterilized together with the first microwave generator 172.

Here, the first and second microwave generator may use magnetron. The magnetron is well-known in its detailed structure and operations, thereby being omitted.

Since the microwaves radiated by the first and second microwave generator are not so long and eliminated before reaching the room, the channel 110 may not be made of material which can shut off the microwaves. Alternatively, the channel may be made of the material which can shut off the microwaves for safety.

Thus, the humidity of the air drawn into the room may be adjusted and bacteria may be sterilized by the humidity adjusting and sterilizing device, thereby pleasant interior atmosphere being maintained.

Therefore, the humidity adjusting and sterilizing device according to the present invention have the above advantageous effects.

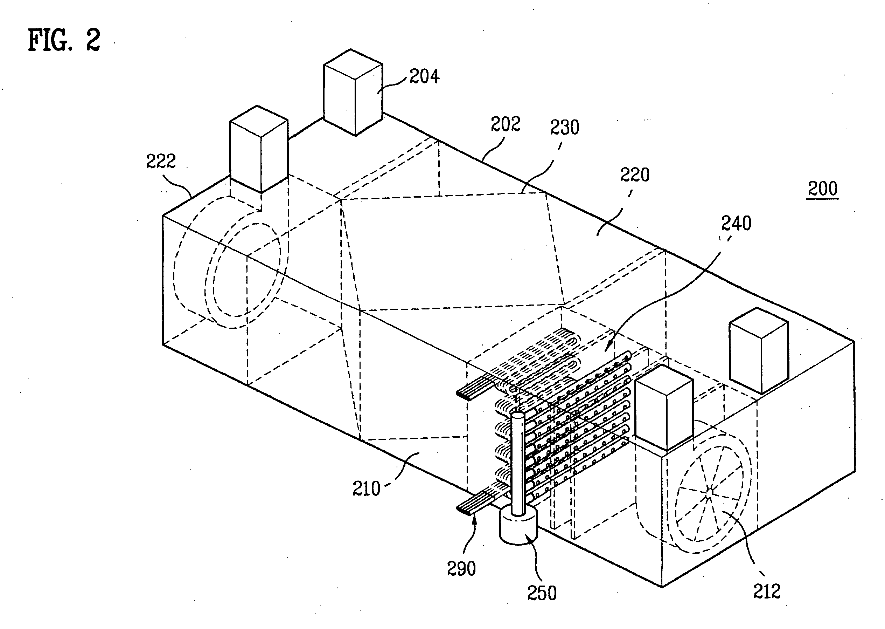

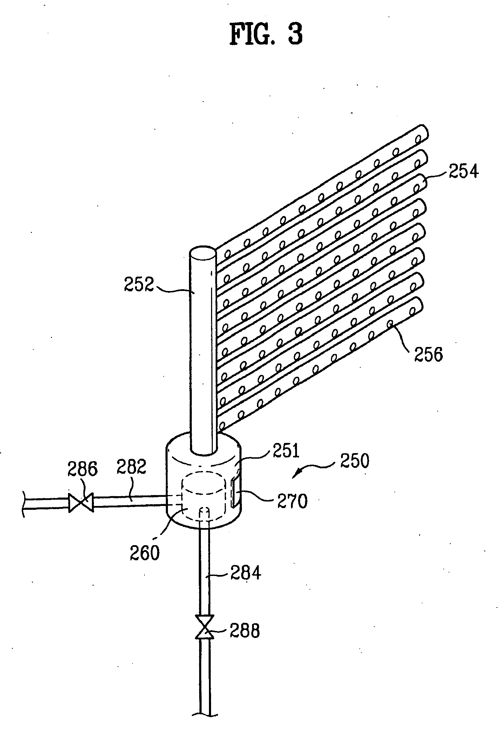

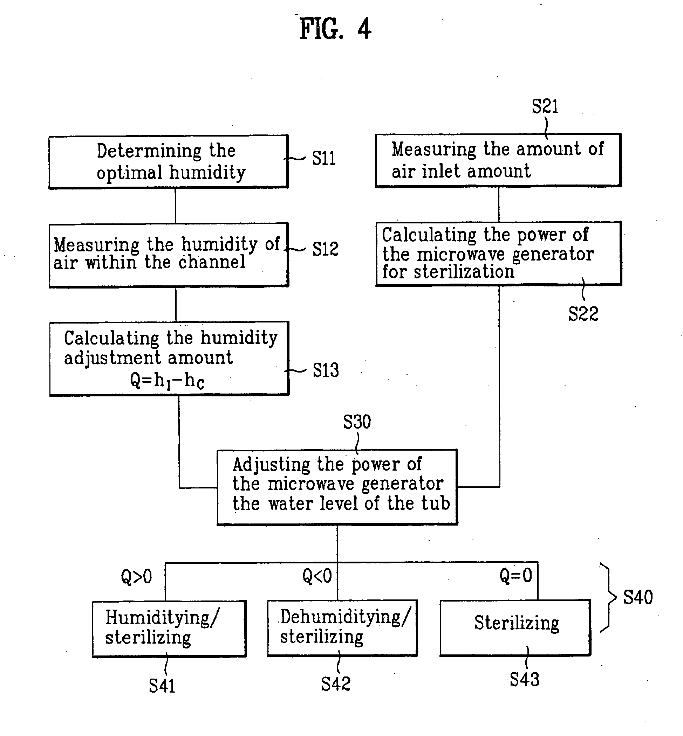

FIG. 2 a perspective view illustrating a ventilation apparatus having a humidity adjusting and sterilizing device according to another embodiment of the present invention. FIG. 3 is a perspective view enlargedly illustrating the housing of FIG. 2. FIG. 4 is a method for controlling the ventilation apparatus having a humidity adjusting and sterilizing device according to the present invention.

As shown in FIG. 2, the ventilation apparatus according to the present invention includes a case 202 defining an exterior thereof, an inlet channel 210 provided within the case 202 for guiding exterior air into the room and an outlet channel 220 provided within the case 202 for discharging interior air to an outside.

An inlet fan 212 and an outlet fan 222 are provided outlet ends of the inlet channel 210 and of the outlet channel 220 for forcibly ventilating the air within the inlet and outlet channel.

**.** Some portions of the inlet channel 210 and the outlet channel 220 are crossed in the case 202, and a heat exchanger 230 is provided in the crossed portion.

The heat-exchanger 230 has a plurality of inlet passages (not shown) in communication with the inlet channel 210, and a plurality of outlet passages (not shown) adjacent to the inlet passages and in communication with the outlet channel 220. Also, a partition wall (not shown) dividing the inlet passages and the outlet passages is made of material with good thermo-conductivity. Thus, the air drawn through the inlet channel 210 and the air discharged through the outlet channel 220 are heat-exchanged each other, and then the heat of the interior air is collected.

A humidity adjusting and sterilizing device 240 is provided within the case 202.

The humidity adjusting and sterilizing device 240 includes a housing 250, a tub 260, a microwave generator 270, as similarly as the humidity adjusting and sterilizing device 100 (see FIG. 3), and preferably, is provided within the inlet channel 210.

The humidity adjusting and sterilizing device will be described in detail as follows.

As shown in FIG. 3, the humidity adjusting and sterilizing device of the ventilation device 240 according to the present invention includes a housing 250 defining an exterior thereof, a tub 260 storing water therein, a microwave generator 270 radiating microwaves. The housing 250 includes a storing part 251 for storing the tub and the microwave generator, and a first pipe 252 for allowing the steam generated in the storing part 251 to move therein, and a second pipe 254 branched from the first pipe 252 for discharging the steam into the inlet channel 210.

The tub 260 and the microwave generator 270 both generating steam are provided in the storing part 251. The tub 250 storing water therein has an opened side. Also, the microwave generator 270 radiates microwaves into the storing part 251 and heats the water of the tub 260, only to generate steam.

The first pipe 252 is provided in an upper portion of the storing part 251, with communicating with the storing part 251, for allowing the steam generated in the tub 260 to move. At least one second pipe 254 is spaced apart at a predetermined distance in a longitudinal direction of the first pipe 252.

some portion of the second pipe 254 is provided within the inlet channel of the case, and the second pipe 254 is hollow shaped so that the steam drawn into the first pipe 252 may flown therein. A hole 256 is formed on the second pipe portion provided in the inlet channel 210 to discharging the steam and microwaves there through.

That is the steam generated in the tub 260 is moved into the second pipe through the first pipe 252, and discharged into the inlet channel 210 through the hole 256.

Here, the housing 250 may be provided within the inlet channel 210, but the storing part 251 and the first pipe 252 are provided in a side portion of a case exterior surface. Only the second pipe 354 is provided in the inlet channel 210 and passes through the case. ,

The housing 2509 is made of material which can shut off the microwaves radiated by the microwave generator 270 without passing through the microwaves.

Also, the housing 250 and the tub 260 are made of material which has good resistance against heat/humidity and which can prevent deformity caused by the heat of steam.

Thus, according to the embodiment, the housing 250 is made of stainless, and the tub is made of heat resistant glass.

The material of the housing 250 and the tub is not limited to the above examples, and may be applied to various kinds of materials.

Hence, the microwaves radiated by the microwave generator 270 are reflected within the housing 250, provided with the storing part 251, the first pipe 252 and the second pipe 253, and then discharged into the inlet channel 210 through the hole 256 to perform sterilization.

Of course, the steam is in high temperature and the effect of sterilizing bacteria contained in the air may be expected.

The tub 260 further may include a water supply pipe 282 for supplying water and a water drainage pipe 284 for draining the water within the tub. Preferably, a water supply valve 286 and a water drainage valve 288 are provided in the water supply pipe 282 and the water drainage pipe 283, respectively.

Also, it is preferred that the second pipe 254 is mounted in a down air stream portion within the inlet channel, compared with the heat-exchanger 230. That is, the exterior air drawn into the inlet channel 210 passes through the heat-exchanger 230 and then passes through the second pipe 254. Alternatively, the position of second pipe 254 is not limited to the above, and may be provided in the upper air-stream portion, compared with the heat-exchanger 230.

This embodiment present that the second pipe 254 is provided in the down air-steam portion within the inlet channel 210, compared with the heat-exchanger 230.

Preferably, the humidity adjusting and sterilizing device 240 includes a humidity sensor (not shown) for measuring the humidity of the air drawn into the room from the inlet channel 210.

As similarly as the humidity sensor 190 in FIG. 1, the humidity sensor may be provided in a portion of the inlet channel 210 so that the air may be flown into the humidity sensor before the second pipe 254.

That is for the reason that the humidity sensor can measure the humidity of the exterior air supplied into the room before receiving the humidity from the second pipe 254.

Also, in case that the second pipe 254 is provided in the portion of the inlet channel for the air to flow through the heat-exchanger before the second pipe, the humidity sensor may be provided in a down air-stream portion, compared with the position of heat-exchanger 230. Also, together with that the humidity sensor may be provided in an upper air stream portion, compared with the second pipe 254. That is, the humidity sensor is provided between the heat-exchanger 230 and the second pipe 254.

since the exterior air drawn into the room is heated/cooled after passing through the heat-exchanger 230 and relative humidity is changed, it is preferred that the humidity of the air is measured after the humidity change.

Furthermore, the inlet fan 212, the outlet fan 222 and a controller (not shown) for controlling the humidity adjusting and sterilizing device.

The operations of ventilation apparatus according having the above configuration to the present invention will be described.

Firstly, the inlet fan 212 and the outlet fan 222 are operated and interior air is discharged to an outside through the outlet channel 220. Also, the exterior air is drawn into a room through the inlet channel 210.

Hence, the air flowing within the inlet channel 210 and the outlet channel 220 is heat-exchanged as passing through the heat-exchanger 230, and the exterior air drawn into the room collects waste heat contained in the interior air to heat/cool.

Commonly, since the interior temperature is lower than the exterior temperature in the summer, the exterior air drawn into the room is cooled as passing through the heat-exchanger. Whereas, since the exterior temperature is higher than the interior temperature in the winter, the exterior air drawn into the room is heated as passing through the heat-exchanger.

The temperature of exterior air supplied into the room through the inlet channel 210 is changed through the heat-exchanger 230, such that the humidity thereof may be high or low. That is, if the exterior air is cooled as passing through the heat-exchanger, the humidity is getting high. Whereas, if the exterior air is heated as passing through the heat-exchanger, the humidity is getting low.

Hence, the humidity of the exterior air having passed through the heat-exchanger is measured by the humidity sensor (not shown):

If the measured humidity is lower than the predetermined optimal humidity, the water supply pipe 282 and the water supply valve 286 of the humidity adjusting and sterilizing device are opened to fill the tub with water.

Here, the predetermined optimal humidity is the optimal humidity key-inputted in the controller. Commonly the range between 40%~60% of relative humidity is preferred, and more specifically classified optimal humidity may be predetermined as well.

Also, the controller may determine the optimal humidity according to the season and the temperature, or a user may directly input the humidity in the controller as he/she wishes.

Next, the microwave generator 270 is operated to radiate the microwaves into the housing.

Here, the housing 250 is made of material which can shut off the microwaves, and the tub 260 is made of material which can transmit the microwaves. Thus, the microwaves are reflected within the housing, thereby heating the water of the tub 260.

The heated water generates steam, and the steam moves to the second pipe 254 through a first pipe252 provided in an upper portion of the housing 250. Hence, the steam is discharged into the inlet channel 210 through the hole 256 formed in the second pipe 254.

Accordingly, the discharged steam is mixed with the exterior air flowing within the inlet channel 210 to humidify the exterior air drawn into the room enough to reach the predetermined optimal humidity.

Meanwhile, since the steam discharged into the inlet channel has the high temperature, the bacteria contained in the air flowirig within the inlet channel 210 may be sterilized due to the heat of the steam.

Also, since the storing part 250, the first pipe252 and the second pipe 254 are made of the material which can shut off the microwaves, the microwaves radiated by the microwave generator 270 pass through the storing part 250, the first pipe 252 and the second pipe 253, and discharged into the inlet channel 210 to sterilize bacteria contained within the exterior air drawn into the room.

Moreover, the effect of sterilizing bacteria contained in the water may be expected, because the water of the tub 260 is heated.

The microwaves radiated by the microwave generator 270 has a short reach and the ventilation apparatus is installed on the ceiling, the microwaves discharged into the inlet channel 210 can not reach the room and are eliminated before reaching the room. Thereby, the microwaves cannot affect residents and interior belongings.

Alternatively, for a perfect safety, some part of the inlet channel 210 having the second pipe 254 may be made of material which can shut off the microwaves.

Furthermore, a dehumidifier 290 may be provided within the inlet channel for dehumidifying the air drawn into the room.

As shown in FIG. 2, the dehumidifier is provided within the inlet channel and removes humidity of the exterior air supplied into the room.

The dehumidifier 290 includes a heat-exchanger for dehumidifying the air passing there through and a drainage pipe for drain the water condensed by the heat-exchanger. The above configuration is well-known to those skilled in the art, thereby the detailed description for the dehumidifier being omitted.

Preferably, the dehumidifier 290 is provided in a down air-stream portion of the inlet channel 210, compared with the heat-exchanger 230, but the above position is not limited thereto. The dehumidifier 290 may be provided in an upper air-stream portion of the inlet channel 210. The following description embodies that the dehumidifier 290 is provided in the down air-stream portion of the inlet channel 210, compared with the heat-exchanger.

Hence, if the measured humidity of the air drawn into the room is higher than the predetermined optimal humidity, the dehumidifier 290 is operated to dehumidify the air enough that the air may have the predetermined optimal humidity.

At that time, the water of the tub is drained through the water drain pipe 284 to empty the tub. Hence, the microwave generator 270 is operated to radiate the microwaves into the housing 250.

The microwaves radiated into the housing are discharged into the inlet channel 210 through the hole 256 of the second pipe 254 to sterilize bacteria contained in the exterior air.

Accordingly, the ventilation apparatus according to the present invention may performs humidity adjusting as well as sterilizing bacteria, even when the humidity of the exterior air drawn into the room is higher than the predetermined optimal humidity.

According to the ventilation apparatus having the humidity adjusting and sterilizing device, the exterior air supplied into the room may be humidified and dehumidified, and bacteria contained in the air may be sterilized, and waste heat is collected. Thereby, the interior air may be maintained pleasant and fresh.

Meanwhile, another embodiment of the present invention, a method for controlling the ventilation apparatus having the humidity adjusting and sterilizing device will be described.

In another embodiment, the configuration of the ventilation apparatus is the same as that of the ventilation apparatus having the humidity adjusting and sterilizing device described in the embodiment. Thereby, the detailed description thereof will be omitted.

FIG. 4 is a flow chart illustrating a method for controlling the ventilation apparatus having a humidity adjusting and sterilizing device according to the present invention. First, according to the method for controlling the ventilation apparatus having a humidity adjusting and sterilizing device, a step of calculating the optima humidity is performed (S11).

The optimal humidity (h_{I}) may be the predetermined value of the controller, or may be calculated based on the current room temperature, or may be directly inputted by a user.

Hence, a step of measuring the current humidity (h_{c}) of the exterior air drawn into the room within the inlet channel 210 is performed (S12).

Then a step is performed where the humidity adjustment amount (Q) which enable the exterior air to reach the optimal humidity is calculated (S13).

Together with the above steps, a step of measuring the air inlet amount (S21) is performed simultaneously. The air inlet amount is the amount of the air drawn into the room through the inlet channel 210.

The air inlet amount may be measured by using the rotation number of the inlet fan 212 provided in a side of the inlet channel 210. Of course in that case, a device for measuring the rotation number of the inlet fan 212 should be provided, and alternatively the air inlet amount may be measured by another means.

Next, a step of calculating the power of the microwaves generator 270 which can sterilize bacteria contained in the air drawn into the room is performed (S22).

Hence, a step of finally calculating the water level of the tub 260 and the power of the microwave generator 270 by combining the humidity adjustment amount(Q) and the power of the microwave generator 270 calculated in the above steps (S13 and S22).

If all the microwaves radiated by the microwave generator 270 are not discharged into the inlet channel 210 and some microwaves heat the water of the tub, the microwaves may be weak or some of them may disappear. Thus, these differences may be compensated and the final power of the microwave generator 270 which can adjust humidity and sterilize bacteria is adjusted as considering the microwaves which may be weak or disappear during the heating of the tub water and the water level of the tub.

A step (S40) of operating the humidity adjusting and sterilizing device by the water level of the tub 260 and the power of the microwave generator determined in the step (S30) .

Here, the step (S40) may have the following 3 ways to perform humidity adjusting and sterilizing.

First is the case that the humidity of the exterior air drawn into the room is lower than the optimal humidity (S41). At that time, the exterior air should be humidified. Then, after water is filled in the tub 260, the microwave generator 270 is operated to humidify the air flowing within the inlet channel 210 and sterilize bacteria.

Second is the case that the humidity of the exterior air drawn into the room is higher than the optimal humidity (S42). At that time, the exterior air should be dehumidified. The dehumidifier 290 is operated, and the water of the tub is emptied through the water drainage pipe 284. Hence, the microwave generator 270 is operated to dehumidify the air flowing in the inlet channel 210 and sterilize bacteria.

Since the tub is empty at that time, the microwaves radiated by the microwave generator 270 are not weak and may not disappear.

Third is the case that humidity of the exterior air drawn into the room is the same as the optimal humidity (43). At that time, the exterior air needs neither humidifying nor dehumidifying. Only sterilization is needed. Hence, after the water drainage valve 288 is opened and the water of the tub 260 is drained through the water drainage pipe 284, the microwave generator 270 is operated to sterilize the air flowing in the inlet channel 210.

As described above, since the tub 260 is empty, the microwaves may be discharged into the inlet channel to perform sterilization without being weak or disappearing.

The another embodiment of the method may be applied not only to the ventilation apparatus having a humidity adjusting and controlling device, but also to a humidity adjusting and controlling device according the present invention.

As described before, the ventilation apparatus and the method for controlling the same have the following advantageous effects.

The ventilation apparatus has an advantageous effect that the room may always maintain pleasant and fresh, because the interior air is humidified/dehumidified at the optimal humidity.

Furthermore, the ventilation apparatus has another advantageous effect that it may be installed in small space, because the volume of the humidity adjusting and sterilizing device is not large.

Still further, the ventilation apparatus has a third advantageous effect that bacteria contained not only in the air but also in the water may be sterilized.

Still further, the ventilation apparatus has a fourth advantageous effect that user inconveniences may be prevented, because the microwave generator having a long usage life is used for humidifying and sterilizing.

Still further, the ventilation apparatus has a fifth advantageous effect energy may be saved more a heating humidifying device even in the same capacity, because the microwaves are used.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A humidity adjusting and sterilizing device comprising:
a channel allowing air to flow therein;
a housing having a side in communication with the channel, the housing having the other sides closed;
a tub mounted within the housing for holding water therein; and
a microwave generator for heating the water within the tub by radiating microwaves into the housing and the tub to humidify the air within the channel and for sterilizing bacteria contained in the air of the channel by the microwaves discharged into the channel.

2. The humidity adjusting and sterilizing device of claim 1, wherein the housing is made of material which shuts off the microwaves radiated by the microwave generator.

3. The humidity adjusting and sterilizing device of claim 1 or 2, wherein the tub is made of heat-proof material which passes through the microwaves radiated by the microwave generator and is prevented from being in deformity by the heat.

4. The humidity adjusting and sterilizing device of any one of the preceding claims, wherein the microwave generator comprises a magnetron.

5. The humidity adjusting and sterilizing device of any one of the preceding claims, further comprising a microwave generator provided within the channel for sterilizing bacteria contained in the air flowing within the channel.

6. The humidity adjusting and sterilizing device of any one of the preceding claims, further comprising a water supply pipe connected with the tub for supplying water to the tub.

7. The humidity adjusting and sterilizing device of any one of the preceding claims, further comprising a water drainage pipe connected with the tub for draining the water within the tub.

8. The humidity adjusting and sterilizing device of any one of the preceding claims, further comprising a humidity sensor for measuring the humidity of air flowing within the part.

9. The humidity adjusting and sterilizing device of claim 8, wherein the humidity sensor is provided at a portion of the channel so that the air may be flown through the humidity sensor before the housing.

10. A ventilation apparatus comprising:
a case defining an exterior thereof;
an inlet channel provided within the case for drawing exterior air into a room;
an outlet channel provided within the case for discharging interior air to an outside;
a humidity adjusting and sterilizing device mounted within the inlet channel for adjusting humidity of the air drawn into the room and sterilizing bacteria contained in the air flowing within the channel.

11. The ventilation apparatus of claim 10, wherein the humidity adjusting and sterilizing device comprises:
a housing having a side in communication with the inlet channel, the housing having the other sides closed;
a tub mounted within the housing for holding water therein; and
a microwave generator for heating the water within the tub by radiating microwaves into the housing and the tub and for sterilizing bacteria contained in the air of the inlet channel by discharging the microwaves into the housing and the tub.

12. The ventilation apparatus of claim 11, wherein the housing comprises:
a holding part for holding the tub and the microwave generator therein;
a first pipe having an end in communication with the holding part, the first pipe extended toward a side; and
at least one second pipe having at least one portion provided within the inlet channel and an end thereof in communication with the first pipe, the second pipe having a plurality of holes formed on the portion provided within the inlet channel.

13. The ventilation apparatus of claim 11 or 12, wherein the humidity adjusting and sterilizing device comprises:
a water supply pipe connected with the tub for supplying water into the tub; and
a valve for selectively opening/closing the water supply pipe.

14. The ventilation apparatus of any one of claims 11 to 13, wherein the humidity adjusting and sterilizing device further comprises:
a water drainage pipe connected with the tub for draining the water within the tub to an outside; and
a valve selectively opening/closing the water drainage pipe.

15. The ventilation apparatus of any one of claims 11 to 14, wherein the humidity adjusting and sterilizing device further comprises a humidity sensor for measuring the humidity of the air flowing within the inlet channel.

16. The ventilation apparatus of claim 15, wherein the humidity sensor is provided at a portion of the inlet channel so that the air may be flown through the humidity sensor before the housing.

17. The ventilation apparatus of any one of claims 11 to 16, wherein the housing is made of material which shuts off the microwaves radiated by the microwave generator.

18. The ventilation apparatus of claim 17, wherein the housing is made of stainless.

19. The ventilation apparatus of any one of claims 11 to 18, wherein the tub is made of material which transmits microwaves.

20. The ventilation apparatus of claim 10, wherein the humidity adjusting and sterilizing device further comprises a heat-exchanger provided within the case for exchanging heat between the air of the inlet channel and the air of the outlet channel.

21. The ventilation apparatus of claim 20, wherein the humidity adjusting and sterilizing device is mounted lower than the heat-exchanger.

22. The ventilation apparatus of any one of claims 11 to 21, wherein the humidity adjusting and sterilizing device further comprises a dehumidifier for dehumidify air.

23. The ventilation apparatus of claim 22, wherein the dehumidifier is provided in the inlet channel and is lower than the heat-exchanger.

24. A method for controlling a ventilation apparatus having a humidity adjusting and sterilizing device comprising steps of:
predetermining an optimal humidity of interior air;
measuring the humidity of air drawn into a room by using a humidity sensor;
determining the amount of humidity adjustment based on the comparison between the optimal humidity and the measured humidity of air drawn into the room; and
adjusting the humidity of air drawn into the room by using the microwave generator and the dehumidifier.

25. The method for controlling a ventilation apparatus having a humidity adjusting and sterilizing device of claim 24, wherein humidification is performed by the microwave generator until, the humidity of air drawn into the room reaches to the optimal humidity, in case that the measured humidity of air drawn into the room is lower than the predetermined optimal humidity.

26. The method for controlling a ventilation apparatus having a humidity adjusting and sterilizing device of claim 24 or 25, wherein dehumidification is performed by the dehumidifier until the humidity of air drawn into the room reaches to the optimal humidity, in case that the measured humidity of air drawn into the room is higher than the predetermined optimal humidity.

27. The method for controlling a ventilation apparatus having a humidity adjusting and sterilizing device of any one of claims 24 to 26, further comprising steps of:
calculating the power of the microwave generator for stylizing bacteria contained in the air drawn into the room based on the air inlet amount, and
sterilizing bacteria contained in the air by using the microwave generator.

28. The method for controlling a ventilation apparatus having a humidity adjusting and sterilizing device of claim 27, wherein the water within the tub is emptied and sterilization is performed by operating the microwave generator, in case that the humidity of air drawn into the room is the same or high as/than the predetermined optimal humidity.
